# EUROPÄISCHE PATENTSCHRIFT

(11) **EP 1 205 158 B1**
(45) Veröffentlichungstag und Bekanntmachung des Hinweises auf die Patenterteilung: **06.04.2005**
(21) Anmeldenummer: 00124574.5
(22) Anmeldetag: 10.11.2000
(51) Int. Cl.: A61C 8/00

(54) **Zahnimplantat**
Dental implant
Implant dentaire

(43) Veröffentlichungstag der Anmeldung: 15.05.2002
(73) Patentinhaber: Dinkelacker, Wolfgang, Dr. med. dent., 71063 Sindelfingen (DE)
(72) Erfinder: Dinkelacker, Wolfgang, Dr. med. dent., 71063 Sindelfingen (DE)
(74) Vertreter: Kindermann, Manfred

(56) Entgegenhaltungen:
- EP-A- 0 868 889
- WO-A-97/37610
- DD-A- 250 052
- DE-A- 19 735 103
- US-A- 5 246 370
- US-A- 5 779 480

## Beschreibung

### Bereich der Erfindung

Die Erfindung bezieht sich auf ein Zahnimplantat mit einem Implantatkörper, der eine Implantatwurzel und einen Implantatkopf aufweist und mit einem Aufbaukörpers verbunden ist, auf den ein Zahnersatz aufgesetzt wird.

### Stand der Technik

Bei enossalen Zahnimplantaten ist es bekannt, zwischen Implantatkopf und Zahnkrone eine Distanzhülse anzubringen, die an Ihrem Umfang eine umlaufende Ansatzschulter aufweist, an die sich der untere Rand der Zahnkrone anschließt (DE-A 195 09 762). Die Ansatzschulter ist wulstartig konzentrisch nach außen gewölbt und verläuft in Bezug auf die Implantatachse schräg mit einem über ihren Umfang variierenden Abstand zum oberen Ende des Implantatkopfes, um hierdurch und durch entsprechende Wahl der Basishöhe der Ansatzschulter eine verbesserte Anpassung des Überganges zwischen Zahnkrone und Implantat an die anatomischen Gegebenheiten zu erreichen. Hierbei dient die Distanzhülse als Implantatkopf. Sie ist nach unten geschlossen ausgebildet und mittels Gewinde in den Grundkörper des Implantats eingeschraubt und besitzt eine zentrale Gewindebohrung zur Aufnahme des Gewindebolzens, an dem die Zahnkrone befestigt wird. Ein Zentrierbund am unteren Ende der Distanzhülse ist mit vertikalen Vorsprüngen versehen, die in entsprechende Ausnehmungen des Grundkörpers eingreifen und zur Ausrichtung der Zahnkrone und Sicherung derselben gegen Verdrehung dienen.

Die EP 0 868 889-A des gleichen Anmelders offenbart ein enossales Zahnimplantat, das ein rotationssymmetrisches Unterteil, ein Kopfteil sowie eine vom Kopfteil ausgehende axiale Gewindebohrung umfaßt zur Aufnahme einer Befestigungsschraube für die Halterung eines Kontaktkörpers, der eine Zahnkrone trägt. Das Kopfteil weist eine zweiseitige Verjüngung auf, die durch beiderseits der Gewindebohrung und quer zur Zahnreihe verlaufende Abschrägungen gebildet wird. Die Abschrägungen bilden von den Randbereichen einer Stirnfläche des Kopfteils ausgehende Schnittlinien mit dem Umfang des Kopfteils. Die Schittlinien verlaufen in variabler Höhe und sind dem natürlichen Verlauf der Oberkante des Kieferknochens angeglichen. Der mit der Zahnkrone verbundene Kontaktkörper ist an die Verjüngung am oberen Ende des Implantatkopfes angepaßt und zur Zahnkrone hin entsprechend ausgestaltet. Durch diese Form des Implantats wird eine Anpassung an die Niveauunterschiede zwischen den Buccal- und Lingualhöhen und der Approximalhöhe des Knochenverlaufs erreicht und eine natürliche Oberkante des Kieferknochens nachgebildet.

US-Patent 5,246,370 offenbart ein Dentalimplantat, das aus einem unrunden Implantatkörper und einer zylindrischen Wurzel besteht, die im Kieferknochen verankert wird. Der Implantatkörper ist dreieck- oder rechteckförmig ausbildet oder hat eine Eiform, die an einander gegenüberliegenden Seiten verbreitert ist. Des weiteren weist der Implantatkörper eine Ausnehmung auf, die in ihrer Form der Form des Implantatkörpers entspricht und in die ein entsprechend angepasster Einsatz eingesetzt wird.

### Zusammenfassung der Erfindung

Der Erfindung liegt die Aufgabe zugrunde, ein Zahnimplantat der in EP 0 868 889-A genannten Art weiterzuentwickeln und insbesondere unter Beibehaltung der an die Niveauunterschiede im Verlauf des Kieferknochens angepaßten Form des Implantatkopfes eine durchgehende Peripherie bis zum unteren Rand des Zahnersatzes zu ermöglichen.

Das erfindungsgemäße Zahnimplantat, wie es in Patentansprüch 1 definiert ist, weist einen Implantatkopf auf, der an seinem oberen Ende in einander gegenüberliegenden Bereichen ellipsenartig verbreitert ist. Der Implantatkopf besitzt eine entsprechend der Verbreiterung ellipsenartig geformte Ausnehmung, in die ein entsprechend geformter Aufbaukörper eingesetzt wird. Des weiteren weist der Implantatkopf zu seiner Außenkante hin nach unten gerichtete Abschrägungen auf, die in Bezug auf die Implantatachse in unterschiedlicher Höhe verlaufen und in den verbreiterten Bereichen des Implantatkopfes tiefer liegen als zwischen diesen Bereichen.

Nach einem weiteren Aspekt der Erfindung ist der Implantatkopf zwischen den ellipsenartig verbreiterten Bereichen bogenförmig nach oben gewölbt. Die bogenförmige Wölbung entspricht dem Verlauf des Kiefernochens, wenn sich der Scheitelpunkt der bogenförmigen Wölbung in Höhe des oberen Randes des Kieferknochen befindet.

Der Aufbaukörper ist oberhalb des Implantatkopfes mit einer Verlängerung versehen, die vorzugsweise einen elliptischen und sich zum Ende hin verjüngenden Querschnitt besitzt. Eine Zahnkrone, die auf die Verlängerung aufzementiert wird, überdeckt die bogenförmige Wölbung, wobei der untere Rand der Zahnkrone mit der Außenkante des Impantatkopfes übereinstimmt. Der untere Rand der Zahnkrone folgt dem Verlauf der Außenkante des Impantatkopfes, wodurch eine weitgehende Anpassung an den natürlichen Verlauf von Kieferknochen erreicht wird. Zum anderen bestimmt der natürliche Knochenverlauf den natürlichen Weichgewebeverlauf, so dass es zur Ausbildung einer interimplantären Papillenstruktur kommt.

Die Erfindung ermöglicht eine durchgehende und fugenlose Peripherie des Implantats bis zum unteren Rand der Zahnkrone. Damit wird ein Anhaften von Bakterien erschwert und der Ausbildung von Entzündungsherden entgegengewirkt.

Die an die Niveauunterschiede im Knochenverlauf angepaßte Form des Implantatkopfes vermeidet zirkuläre Entzündungen. Die Osteolyse entsteht auf unterschiedlichem Niveau, wie dies auch beim normalen Zahn der Fall ist. Insgesamt wird die Anpassung an die Anatomie des Kieferknochens und des darüber liegenden Weichgewebes verbessert.

### Beschreibung der Zeichnungen

Nachfolgend ist ein Ausführungsbeispiel der Erfindung anhand von Zeichnungen beschrieben. Es zeigen:
- Figur 1: eine Schnittdarstellung des Zahnimplantats gemäß der Erfindung mit einer entlang der Längsachse des Implantats verlaufenden Schnittlinie (Schnitt A-A in Figur 3);
- Figur 2: eine weitere Schnittdarstellung des Zahnimplantats von Figur 1 mit einem gegenüber der Figur 1 um 90 Grad versetzten Verlauf der Schnittlinie (Schnitt B-B in Figur 3);
- Figur 3: eine Draufsicht auf das Implantat nach den Figuren 1 und 2;
- Figur 4: eine Draufsicht auf den Implantatkörper 1 des Implantats nach den Figuren 1 bis 3;
- Figur 5: eine Ansicht des Implantatkörpers 1 von unten;
- Figur 6: eine Schnittdarstellung des Implantatkörpers 1 mit einer entlang der Längsachse verlaufenden Schnittlinie (Schnitt C-C in Figur 4); und
- Figur 7: eine weitere Schnittdarstellung des Implantatkörpers 1 mit einem gegenüber der Figur 6 um 90 Grad versetzten Verlauf der Schnittlinie (Schnitt D-D in Figur 4).

### Detaillierte Beschreibung des dargestellten Ausführungsbeispiels

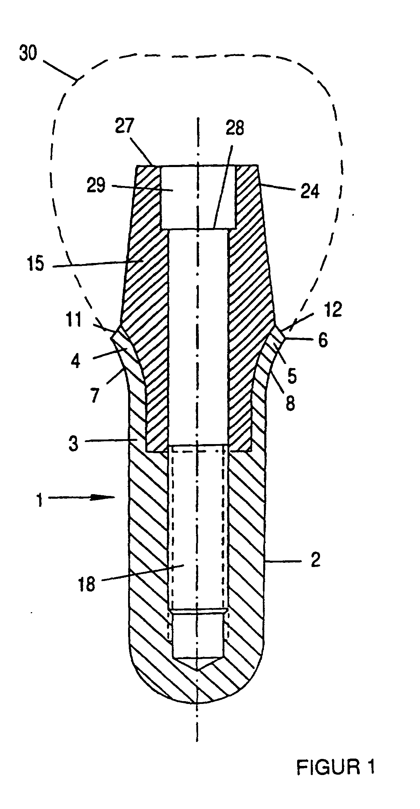

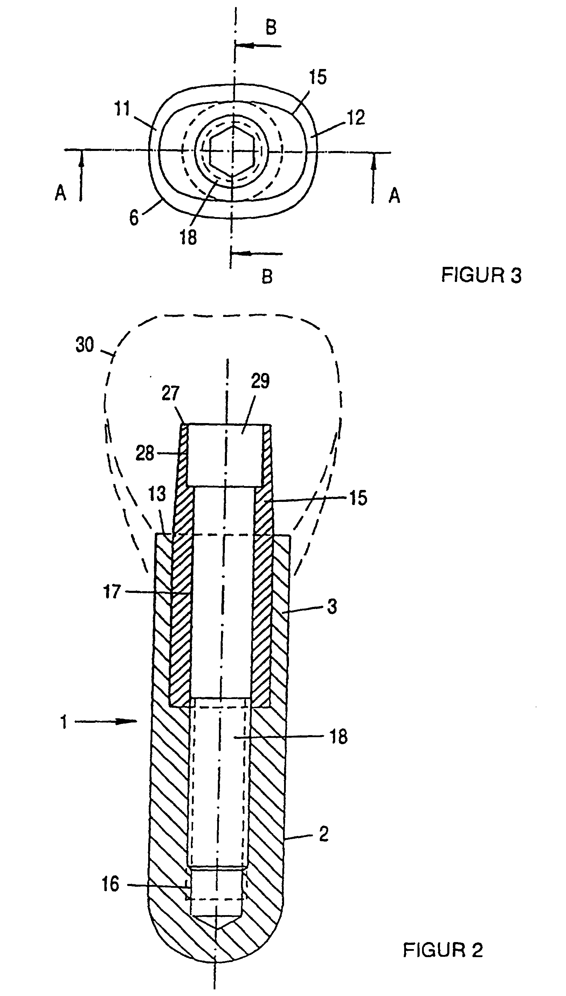

Das dargestellte Ausführungsbeispiel zeigt ein enossales Zahnimplantat mit einem Implantatkörper 1, der eine zylindrische Implantatwurzel 2 und einen Implantatkopf 3 aufweist (Figuren 1 bis 3). Die Implantatwurzel 2 ist am unteren Ende abgerundet und in für sich bekannter Weise mit einem nichtgezeigten Durchbruch im unteren Teil und/oder mit nichtgezeigten Oberflächenstrukturen versehen, die das Einwachsen des Implantats im Kieferknochen fördern. Der Implantatkopf 3 ist in zwei gegenüberliegenden Bereichen 4, 5 nach außen verbreitert. Der äußere Rand 6 des Impantatkopfes 3 erhält dadurch eine ellipsenartige Form (Figur 3). Das Implantat 1 wird so in den Kiefer eingesetzt, daß die Längsachse der Ellipse quer zum Kieferknochen verläuft und daß sich die gegenüberliegenden verbreiterten Bereiche 4, 5 auf der Lingual- und Buccalseite des Kieferknochens befinden. Zwischen der zylindrischen Implantatwurzel 2 und den Verbreiterungen 4, 5 bestehen stufenlose Übergänge 7, 8, die vorzugsweise als Hohlkehlen ausgebildet sind.

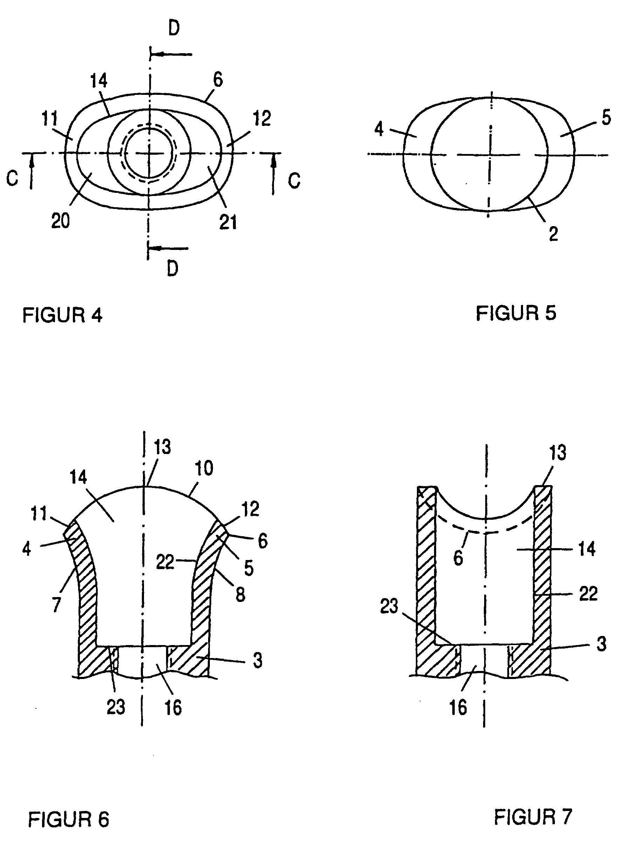

Zwischen den gegenüberliegenden Bereichen 4, 5 besitzt der Implantatkopf 3 eine bogenförmige Wölbung 10, die sich bis zur äußeren Kante 6 des Implantatkopfes 3 erstreckt und dort in nach außen verlaufende Abschrägungen 11, 12 übergeht (Figur 1 und 6). Aufgrund der bogenförmigen Wölbung 10 verläuft die äußere Kante 6 des Implantatkopfes 3 in unterschiedlicher Höhe und liegt in den verbreiterten Bereichen 4, 5 tiefer als zwischen diesen Bereichen. Im eingesetzten Zustand befindet sich der obere Rand des Kieferknochens in Höhe des Scheitelpunkts 13 der bogenförmigen Wölbung 10. Die äußere Kante 6 des Implantatkopfes 3 entspricht dabei dem Verlauf des Kieferknochenrandes, der von der Approximalhöhe des Kieferknochens zur Lingual- und Buccalseite hin abfällt.

Die bogenförmige Wölbung kann asymmetrisch zur Implantatachse ausgebildet sein. Hierdurch kann der Höhenverlauf der äußeren Kante 6 des Implantatkopfes 3 in den gegenüberliegenden Bereichen unterschiedlich gestaltet und an einen unterschiedlichen Verlauf des Kieferknochenrandes auf der Lingualseite und der Buccalseite angepaßt werden.

Der Implantatkopf weist eine Ausnehmung 14 auf, in die ein Aufbaukörper 15 eingesetzt wird, der mit dem Implantatkörper 1 verbunden wird. Der Implantatkörper 1 besitzt eine axiale Gewindebohrung 16, die mit einer Bohrung 17 im Aufbaukörper 15 fluchtet, wenn dieser in die Ausnehmung 14 eingesetzt wird. Die Bohrung 17 dient zur Aufnahme einer Schraube 18, die in die Gewindebohrung 16 eingeschraubt wird, um den Aufbaukörper 15 im Implantatkörper 1 zu befestigen.

Die Ausnehmung 14 entspricht in ihrem Querschnitt der ellipsenartigen Form des Implantatkopfes 3 und besitzt im Bereich der Verbreiterungen 4, 5 entsprechende Ausbuchtungen 20, 21. In axialer Richtung folgt die Ausnehmung 14 den bogenförmigen Übergängen 7, 8 zwischen der Implantatwurzel 2 und den Verbreiterungen 4, 5. Zwischen dem Außenwandung des Implantatkopfes 3 und der Innenwandung 22 der Ausnehmung 14 ergibt sich somit eine im wesentlichen einheitliche Wandstärke. Der Aufbaukörper 15 ist an den ellipsenartigen Querschnitt der Ausnehmung 14 angepaßt und im Bereich der Ausbuchtungen 20, 21 ebenfalls verbreitert, so daß er fugenlos an der Innenwandung 22 der Ausnehmung 14 anliegt. Durch den ellipsenartigen Querschnitt ist der Aufbaukörper 15 im Implantatkopf 3 gegen Verdrehung gesichert. Nach unten schließt die Ausnehmung mit einer radialen Grundfläche 23 ab, in der sich die Gewindebohrung 16 befindet und die dem unteren Ende des Aufbaukörpers 15 benachbart ist, wenn dieser in die Ausnehmung 14 eingesetzt worden ist.

Der Aufbaukörper 15 weist oberhalb des Implantatkopfes 3 eine Verlängerung 24 auf, die sich vom oberen Rand des Implantatkopfes 3 unter Beibehaltung des ellipsenartigen Querschnitts zum oberen Ende des Aufbaukörpers 15 verjüngt. An seiner oberen Begrenzungsfläche 27 besitzt der Aufbaukörper 15 eine zylindrische Ausnehmung 28 zur Aufnahme des Schraubenkopfes 29.

Der Implantatkörper 1 wird so in eine Bohrung im Kieferknochen eingesetzt, daß die Verbreiterungen 4, 5 quer zur Zahnreihe ausgerichtet sind und der Scheitelpunkt 13 der Wölbung 10 auf der Approximalhöhe des Kieferknochens zu liegen kommt. In dieser Anordnung verläuft der Außenrand 6 des Implantatkopfes 3 in Höhe des Kieferknochenrandes auf der Lingual- und Buccalseite.

Nach der Einheilphase wird der Aufbaukörper 15 in den Implantatkörper 1 eingesetzt und durch Anziehen der Schraube 18 fest mit diesem verbunden. Hierbei kann eine dünne Zementschicht zum Ausfüllen kleiner Hohlräume dienen.
Auf der Verlängerung (24) des Aufbaukörpers 15 wird ein Zahnersatz, wie z.B. eine Krone 30 aufzementiert. Da sich der Aufbaukörper 15 innerhalb des Implantats 1 angeordnet ist, befindet sich unterhalb der Krone eine durchgehende Oberfläche des Implantats 1, in der Fugen oder Stoßkanten durch aneinander angrenzende Teile vermieden sind.

Die Verlängerung (24) verjüngt sich zum oberen Ende hin unter Beibehaltung des ellipsartigen Querschitts.

Die Verlängerung (24) trägt eine Zahnkrone (30) die die bogenförmige Wölbung (10) überdeckt und deren unterer Rand mit der Außenkante (6) des Impantatkopfes (3) übereinstimmt, wobei der untere Rand der Zahnkrone (30) dem Verlauf der Außenkante (6) des Impantatkopfes (3) folgt.

Während die Erfindung anhand einer bevorzugten Ausführungsform beschrieben wurde, können Abwandlungen und andere Ausführungsformen realisiert werden, ohne den durch die Ansprüche definierten Bereich der Erfindung zu verlassen.

## Patentansprüche

1. Ein Zahnimplantat mit einem Implantatkörper (1), der eine zylinderische Implantatwurzel (2) und einen Implantatkopf (3) aufweist, und mit einem Aufbaukörper (15), der mit dem Implantatkopf verbunden ist und auf den ein Zahnersatz (30) aufgesetzt werden kann, der Implantatkopf (3) ist in einander gegenüberliegenden Bereichen (4, 5) verbreitert und weist eine entsprechend der Verbreiterung geformte Ausnehmung (14) auf, an die der Aufbaukörper (15) angepaßt ist, **dadurch gekennzeichnet, dass** der Implantatkopf ) zu seiner Außenkante (6) hin nach unten gerichtete Aschrägungen (11, 12) aufweist, die in Bezug auf die Implantatachse in unterschiedlicher Höhe verlaufen, und dass der Aufbaukörper (15), innerhalb des Implantatkopfes (3) angeordnet ist so dass der untere Rand des Zahnersatzes dem Verlauf der Außenkante (6) des Implantatkopfes folgen kann, und das Implantat eine durchgehende und fugenlose Peripherie bis zum unteren Rand des Zahnersatzes aufweist.

2. Zahnimplantat nach Anspruch 1, **dadurch gekennzeichnet, dass** daß der Implantatkopf (3) zwischen den verbreiterten Bereichen (4, 5) bogenförmig nach oben gewölbt ist (10) und dass die bogenförmige Wölbung (10) dem Verlauf des Kiefernochens entspricht, wenn sich der Scheitelpunkt (13) der bogenförmigen Wölbung in Höhe des oberen Randes des Kieferknochen befindet.

3. Zahnimplantat nach Anspruch 1 und 2, **dadurch gekennzeichnet, dass** die bogenförmige Wölbung (10) des Implantatkopfes (3) stufenlos in die Abschrägungen (11, 12) übergeht.

4. Zahnimplantat nach Anspruch 3, **dadurch gekennzeichnet, dass** die Abschrägungen (11, 12) Teil der bogenförmigen Wölbung sind.

5. Zahnimplantat nach Anspruch 3 oder 4, **dadurch gekennzeichnet, dass** die Abschrägungen (11, 12) in einem durchschnittlichen Winkel zwischen 25° und 40° zur Längsachse des Implantatkörpers (1) verlaufen.

6. Zahnimplantat nach den Ansprüchen 1 bis 5, **dadurch gekennzeichnet, dass** die bogenförmige Wölbung (10) zwischen den verbreiterten Bereichen (4, 5) asymmetrisch ausgebildet ist und dass die Abschrägung (11) des einen (4) der verbreiterten Bereiche des Implantatkopfes (1) tiefer liegt als die Abschrägung (12) des anderen (5) dieser Bereiche.

7. Zahnimplantat nach Anspruch 1, **dadurch gekennzeichnet, dass** zwischen der zylindrischen Implantatwurzel (2) und den ellipsenartig verbreiterten Bereichen (4, 5) stufenlose Übergänge (7, 8) bestehen, und dass die Übergänge (7, 8) als Hohlkehlen ausgebildet sind.

8. Zahnimplantat nach Aspruch 1, **dadurch gekennzeichnet, dass** die ellipsenartig geformte Ausnehmung (14) in ihrer Form der Außenwandung des Implantatkopfes (3) entspricht und in den Bereichen der ellipsenartigen Verbreiterungen der Außenwandung entsprechende Ausbuchtungen (20, 21) aufweist, und dass die Ausnehmung in axialer Richtung den stufenlosen Übergängen (7, 8) folgt.

9. Zahnimplantat nach Anspruch 8, **dadurch gekennzeichnet, dass** der Aufbaukörper (15) einen ellipsenartigen Querschnitt aufweist, der an die Form der Ausbuchtungen (20, 21) angepasst ist.

10. Zahnimplantat nach Anspruch 9, **dadurch gekennzeichnet, dass** der Aufbaukörper (15) oberhalb des Implantatkopfes (3) eine Verlängerung (24) aufweist, die sich zum oberen Ende hin unter Beibehaltung des ellipsenartigen Querschnitts verjüngt.

11. Zahnimplantat nach Anspruch 10, **dadurch gekennzeichnet, dass** die Verlängerung (24) eine Zahnkrone (30) trägt, die die bogenförmige Wölbung (10) überdeckt und deren unterer Rand mit der Außenkante (6) des Impantatkopfes (3) übereinstimmt.

12. Zahnimplantat nach Anspruch 11, **dadurch gekennzeichnet, dass** der untere Rand der Zahnkrone (30) dem Verlauf der Außenkante (6) des Impantatkopfes (3) folgt.

## Claims

1. A dental implant with an implant body (1) which comprises a cylindrical implant root (2) and an implant head (3), and with an abutment body (15) which is connected to the implant head (3) and to which a dental prosthesis may be attached, the implant head (3) is broadened in areas (4, 5) located in opposite to each other and comprises a recess (14) which is formed according to the broadening and to which the abutment body (15) is adapted, **characterized in that** the implant head (3) comprises slopes (11, 12) which are directed downward to the outer edge of the implant head (3) and which extend in different height with respect to the implant axis, and that the abutment body (15) is arranged within the implant head (3) so that the lower rim of the dental prosthesis may follow the course of the outer edge (6) of the implant head and the implant comprises a continuous and jointless periphery up to the lower rim of the dental prosthesis.

2. Dental implant of claim 1, **characterized in that** the implant head (3) comprises an arched curvature (10) between the broadened areas (4, 5) which is upwards directed, and that the arched curvature (10) corresponds to the course of the jaw bone if the vertex (13) of the arched curvature is positioned at the height of the upper rim of the jaw bone.

3. Dental implant of claims 1 and 2, **characterized in that** the arched curvature (10) of the implant head (3) comprises a stepless transition into the slopes (11, 12).

4. Dental implant of claim 3, **characterized in that** the slopes (11, 12) are part of the arched curvature.

5. Dental implant of claims 3 or 4, **characterized in that** the slopes (11, 12) are arranged in an average angle between 25° and 40° with respect to the length axis of the implant body (1).

6. Dental implant of claims 1 to 5, **characterized in that** the arched curvature (10) between the broadened areas (4, 5) is asymmetrically shaped, and that the slope (11) of one (4) of the broadened areas of the implant head (3) is located lower than the slope (12) of the other (5) of the broadened areas.

7. Dental implant of claim 1, **characterized in that** stepless transitions (7, 8) are arranged between the cylindrical implant root (2) and the elliptically broadened areas (4, 5), and that the transitions (7, 8) is formed as concave roundings.

8. Dental implant of claim 1, **characterized in that** the elliptically formed recess corresponds in its shape to the outside wall of the implant head (3) and comprises in the elliptically broadened areas of the outside wall corresponding bulges (20, 21), and that the recess follows in axial direction the stepless transitions (7, 8).

9. Dental implant of claim 8, **characterized in that** the abutment body (15) comprises a cross section of the elliptical type which is adapted to the shape of the bulges (20, 21).

10. Dental implant of claim 9, **characterized in that** abutment body (15) comprises an extension (24) which is arranged above the implant head (3) and which is tapering in the direction of its upper end while maintaining its cross section of the elliptical type.

11. Dental implant of claim 10, **characterized in that** the extension (24) carries a dental crown (30) which covers the arched curvature (10) and the lower rim of which concurs with the outer edge (6) of the implant head (3).

12. Dental implant of claim 11, **characterized in that** the lower rim of the dental crown (30) follows the course of the outer edge (6) of the implant head (3).

## Revendications

1. Implant dentaire avec un corps d'implant (1) qui présente une racine d'implant (2) cylindrique et une tête d'implant (3), et avec un corps d'assemblage (15) qui est solidarisé avec la tête d'implant et sur lequel il est possible de placer une prothèse dentaire (30), la tête d'implant (3) est élargie dans des zones (4, 5) opposées l'une à l'autre et possède un évidement (14) formé de manière à coïncider avec l'élargissement et dans lequel s'adapte le corps d'assemblage (15) **caractérisé en ce que** la tête d'implant (3) présente des biseaux (11, 12) orientés vers le bas, vers son arête extérieure (6), qui s'étendent, si l'on se rapporte à l'axe d'implant, à des hauteurs différentes et **en ce que** le corps d'assemblage (15) est disposé à l'intérieur de la tête d'implant (3) de sorte que le bord inférieur de la prothèse dentaire peut suivre le tracé de l'arête extérieure (6) de la tête d'implant et que l'implant présente une périphérie continue et sans joint jusqu'au bord inférieur de la prothèse dentaire.

2. Implant dentaire selon la revendication 1, **caractérisé en ce que** la tête d'implant (3) est courbée vers le haut (10) à la manière d'un arc, entre les zones élargies (4, 5) et **en ce que** la courbure (10) en forme d'arc correspond au tracé de l'os de la mâchoire lorsque le point de crête (13) de la courbure en forme d'arc se trouve à hauteur du bord supérieur de l'os de la mâchoire.

3. Implant dentaire selon les revendications 1 et 2, **caractérisé en ce que** la courbure (10) en forme d'arc de la tête d'implant (3) passe en continu vers les biseaux (11, 12).

4. Implant dentaire selon la revendication 3, **caractérisé en ce que** les biseaux (11, 12) sont une partie de la courbure en forme d'arc.

5. Implant dentaire selon la revendication 3 ou 4 **caractérisé en ce que** les biseaux (11, 12) s'étendent selon un angle moyen situé entre 25° et 40° par rapport à l'axe longitudinal du corps d'implant (1).

6. Implant dentaire selon les revendications 1 à 5, **caractérisé en ce que** la courbure (10) en forme d'arc est conçue de manière asymétrique entre les zones (4, 5) élargies et **en ce que** le biseau (11) de l'une (4) des zones élargies de la tête d'implant (1) est situé plus bas que le biseau (12) de l'autre (5) de ces zones.

7. Implant dentaire selon la revendication 1, **caractérisé en ce qu'**il existe entre la racine d'implant (2) cylindrique et les zones (4, 5) élargies à la manière d'une ellipse, des transitions (7, 8) continues et **en ce que** ces transitions (7, 8) sont conformées en gorges creuses.

8. Implant dentaire selon la revendication 1 **caractérisé en ce que** l'évidement (14) avec une forme de type elliptique correspond, par sa forme, à la paroi extérieure de la tête d'implant (3) et présente dans les zones des élargissements de type elliptique des courbures évidées (20, 21) correspondant à la paroi extérieure et **en ce que** l'évidement suit dans le sens axial les transitions (7, 8) continues.

9. Implant dentaire selon la revendication 8, **caractérisé en ce que** le corps d'assemblage (15) présente une section de type elliptique adaptée à la forme des courbures évidées (20, 21).

10. Implant dentaire selon la revendication 9, **caractérisé en ce que** le corps d'assemblage (15) présente au-dessus de la tête d'implant (3) un prolongement (24), qui se rétrécit vers l'extrémité supérieure tout en conservant la section de type elliptique.

11. Implant dentaire selon la revendication 10, **caractérisé en ce que** le prolongement (24) supporte une couronne dentaire (30), qui recouvre la courbure (10) en forme d'arc et dont le bord inférieur coïncide avec l'arête extérieure (6) de la tête d'implant (3).

12. Implant dentaire selon la revendication 11 **caractérisé en ce que** le bord inférieur de la couronne dentaire (30) suit le tracé de l'arête extérieure (6) de la tête d'implant (3).
